# EUROPEAN PATENT SPECIFICATION

(11) **EP 1 491 067 B1**
(45) Date of publication and mention of the grant of the patent: **14.09.2005**
(21) Application number: 03720383.3
(22) Date of filing: 10.03.2003
(51) Int. Cl.: H04Q 11/00, H04M 11/06

(54) **METHOD AND SYSTEM FOR OPTIMIZING ADSL CONNECTIONS IN A DSL ACCESS MULTIPLEXOR**
VERFAHREN UND SYSTEM ZUM OPTIMIEREN VON ADSL-VERBINDUNGEN IN EINEM DSLAM
PROCEDE ET SYSTEME POUR OPTIMISER DES CONNEXIONS ADSL DANS UN MULTIPLEXEUR D'ACCES DSL

(30) Priority: 21.03.2002 EP 02368030
(43) Date of publication of application: 29.12.2004
(73) Proprietor: International Business Machines Corporation, Armonk, N.Y. 10504 (US); Compagnie IBM France, 92400 Courbevoie (FR)
(72) Inventor: ELEFTHERIOU, Evangelos, S., CH-8038 Zurich (CH); OELCER, Sedat, CH-8804 Au (CH); ABDELILAH, Youssef, Holly Springs, NC 27540 (US); DAVIS, Gordon, Taylor, Chapel Hill, NC 27517 (US); DERBY, Jeff, H., Chapel Hill, NC 27514 (US); HWANG, Dongming, Apex, NC 27502 (US); WARE, Malcolm, Raleigh, NC 27612 (US); YE, Hua, Durham, NC 27705 (US)
(74) Representative: Therias, Philippe
(86) International application number: PCT/EP2003/003248
(87) International publication number: WO 2003/081942

(56) References cited:
- WO-A-01/35625
- JOHANSSON A: "ADSL LITE - THE BROADBAND ENABLER FOR THE MASS MARKET" ERICSSON REVIEW, no. 4, 1998, pages 154-161, XP000792054 ISSN: 0014-0171

## Description

### Field of the Invention

The present invention relates to Digital Subscriber Line Access Multiplexor (DSLAM) and more specifically to a method and systems for optimizing Asymmetric Digital Subscriber Line (ADSL) connections in DSLAM, based on a flexible digital signal processor and network processor architecture.

### Background of the Invention

Asymmetric Digital Subscriber Line (ADSL) technology provides simultaneous transport capabilities, e.g. Internet high-speed access, voice and fax, over a single existing copper telephone line at low cost. ADSL exploits bandwidth capacity that is not used by traditional voice service on copper telephone line according to one of the several existing protocols, e.g. G.dmt and G.lite protocols standardized at the IUT-T as G.992.1 and G.992.2 respectively. G.dmt provides maximum downstream (core network to customer) speeds of up to 8 megabits per second (Mbps) and upstream speeds of up to 640 kilobits per second (Kbps) while G.lite provides maximum downstream speeds of up to 1.5 Mbps and upstream speeds of up to 512 Kbps. Downstream transmission bandwidth is about 1 MHz for G.dmt and 500 KHz for G.lite.

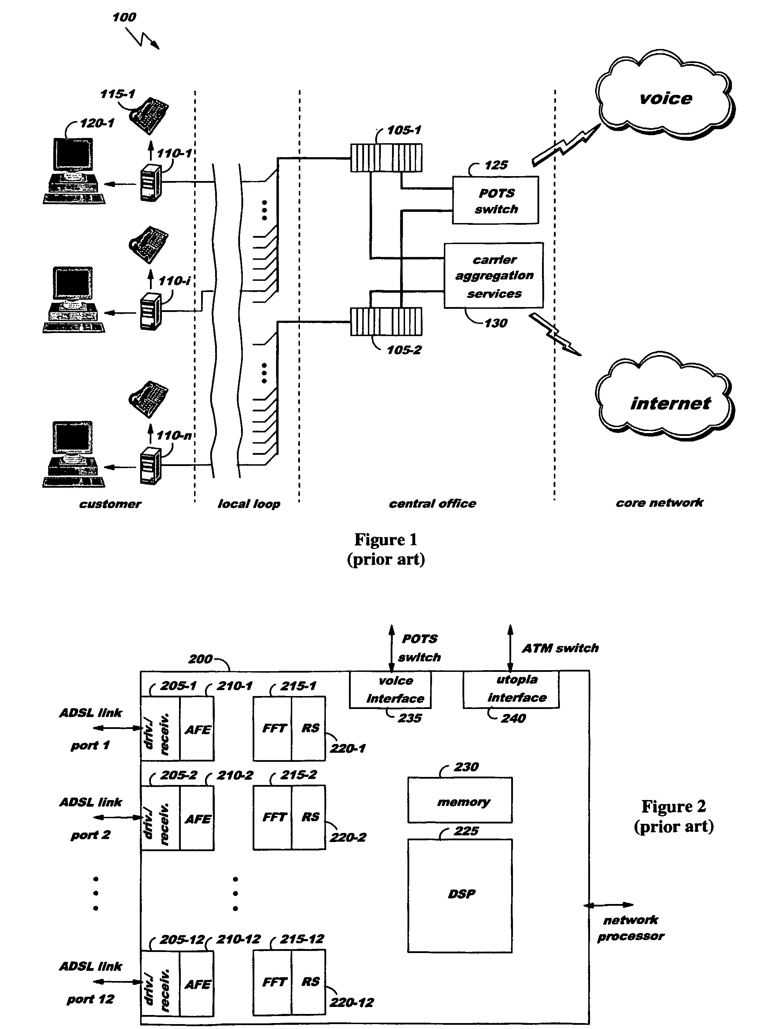

As illustrated on Figure 1, ADSL architecture 100 comprises at least one DSL Access Multiplexor (DSLAM) 105-1 and several remote ADSL units (110-1, 110-i and 110-n) all integrating a splitter to handle simultaneous transport of voice and data. Remote ADSL units and DSLAM are connected through the local loop telephone twisted-pairs. Several communication devices can be simultaneously connected to a single ADSL unit, e.g. phone 115-1 and computer 120-1 are both connected to ADSL unit 110-1. DSLAMs comprise connections to Plain Old Telephone Service (POTS) switch 125 and carrier aggregation services device 130 that are linked to core network, e.g. public switched telephone network and Internet.

Such an ADSL architecture is known from WO 01/35625 A2 (SURF COMMUNICATIONS, LTD), 17 May 2001.

Market studies show that the number of subscribers for digital subscriber line subscriber service around the world increases dramatically each year. As a consequence, the greatest challenge to DSL Access Multiplexor designers is how to integrate more and more DSL channels within a DSLAM box given tight constraints on power consumption for the box.

The three main contributors to power consumption and cost in a DSLAM box are the line drivers and line receivers, the analog front-ends including the A/D and D/A converters, and the digital signal processing components that perform the necessary transceiver signal processing functions.

The line driver is the single biggest contributor to the power consumption typically requiring 750 mW to 900 mW of power for a full-rate G.dmt ADSL signal transmitted from the DSLAM to a remote ADSL unit.

The single biggest contributor to expense is the digital signal processing unit which typically supports 8 to 16 G.dmt ports in 0.18 micron, e.g. IBM SA-27E technology, and 16 to 32 G.dmt ports in 0.13 micron, e.g. IBM Cu-11 technology. The range is largely based on tradeoffs between hard-wired versus programmable DSP-based software solutions. The latter allows flexibility, but usually leads to a less dense (square millimeter of silicon) implementation.

Compared with G.dmt, G.lite lowers system costs per port because it requires about half the complexity of G.dmt from a digital signal processing perspective. G.lite also lowers the power consumption in the line driver approximately by half because it only utilizes half the downstream transmission bandwidth.

Figure 2 illustrates the standard architecture of a DSLAM card 200 comprising 12 ADSL ports supporting the G.dmt protocol. For sake of clarity, data, address, control and power busses are not represented. Each ADSL link is connected to the DSLAM card through a line driver / line receiver for full-rate ADSL, referred to as 205-1 to 205-12, and an Analog Front End (AFE) interface, referred to as 210-1 to 210-12, that comprises A/D and D/A converters. A Fast Fourier Transform unit (FFT) and a block-based correction code unit using Reed Solomon encoding and decoding (RS) are associated to each DSLAM port, e.g. FFT unit 215-1 and RS unit 220-1 are associated to port one. It is to be noticed that one single FFT unit and RS unit may be associated to several ports. Then, a DSP unit 225, associated to memory 230, performs the remaining transceiver signal processing functions and outputs ATM cells or bit streams in STM mode for all DSLAM ports. DSLAM card 200 further comprises a voice interface 235 that is connected to a standard POTS switch and an Utopia interface 240 that transmits data traffic to or receives data traffic from a carrier aggregation unit, e.g. an ATM switch. Furthermore, DSLAM cards are generally linked to an external Network Processor (NP) that controls data traffic. POTS switch, ATM switch and Network Processor are not represented for sake of clarity.

It is to be noticed that the architecture for handling the G.lite protocol is similar and, as mentioned above, requires about half the complexity of G.dmt from a digital signal processing perspective. Furthermore, since the FFT size of the G.lite protocol is half that of the one of the G.dmt protocol in the transmit direction, the FFT function may be performed in roughly half the time as compared with G.dmt.

Although commercial DSLAM products have been delivered based strictly on G.lite at about half the system cost and double the density per fixed power budget when compared to G.dmt, G.lite is only capable of achieving a maximum speed of 1.5Mbps downstream.

Today's market offerings consist in DSLAM cards implementing either the G.dmt or the G.lite protocols. G.lite DSLAM cards comprise twice the port density of G.dmt DSLAM cards. For example, there exist DSLAM line cards with up to 64 G.dmt ports and DSLAM line cards with up to 128 G.lite ports. However, single DSLAM cards allowing 128 users with G.dmt speeds do not exist. Furthermore, such DSLAM card solutions based on current DSLAM methods and technologies would increase power consumption and cost per port accordingly.

### Summary of the Invention

It is a broad object of the invention to remedy the shortcomings of the prior art as described here above.

It is another object of the invention to provide a method and systems for optimizing Asymmetric Digital Subscriber Line connection in Digital Subscriber Line Access Multiplexor.

It is still another object of the invention to provide a method and systems to determine connection protocol of each port of a Digital Subscriber Line Access Multiplexor (DSLAM) according to the number of active subscribers coming into the DSLAM at any given instant.

It is still another object of the invention to provide a method and systems to reduce required digital signal processing resource of Digital Subscriber Line Access Multiplexor.

It is still another object of the invention to provide a method and system to reduce the physical area required to implement a Digital Subscriber Line Access Multiplexor.

It is a further object of the invention to provide a method and system to reduce power consumption of Digital Subscriber Line Access Multiplexor.

The accomplishment of these and other related objects is achieved by a DSL access multiplexor system for optimizing DSL connections comprising :
- i DSL links ;
- flexible and programmable means adapted for handling i DSL links according to a first DSL protocol or j DSL links according to a second DSL protocol, i being greater than j, said first DSL protocol requiring less processing power than said second DSL protocol ; and,
- control means adapted for setting said flexible and programmable means into a first mode handling i DSL links according to said first DSL protocol or into a second mode handling j DSL links according to said second DSL protocol ;
and by a method for optimizing DSL connections in a DSL access multiplexor being adapted to handle at least two DSL protocols wherein a first DSL protocol requires less processing power than the second DSL protocol, said DSL access multiplexor comprising up to i DSL links based on said first DSL protocol and up to j DSL links based on said second DSL protocol, i being greater than j, said DSL access multiplexor further comprising at least one flexible and programmable means, said at least one flexible and programmable means being adapted to handle one of said first and second DSL protocol at a time, said method comprising the steps of:
- looking for new DSL connection request ;
- if a new DSL connection is required and at least one link based on said second DSL protocol is available, setting said requested connection based on said second DSL protocol ;
- else if a new DSL connection is required and at least one link based on said first DSL protocol is available, setting said requested connection based on said first DSL protocol ;
- else if a new DSL connection is required and at least k connections based on said second DSL protocol are already established, k being the minimum integer value allowing to swap k connections according to said second DSL protocol to at least k+1 connections according to said first DSL protocol :

- determining said k connections based on said second DSL protocol according to first predetermined criteria ;
- swapping said k connections based on said second DSL protocol to k connections based on said first DSL protocol ; and,
- setting said requested connection based on said first DSL protocol.

Further advantages of the present invention will become apparent to the ones skilled in the art upon examination of the drawings and detailed description. It is intended that any additional advantages be incorporated herein.

### Brief Description of the Drawings

- **Figure 1**: illustrates the architecture used to provide ADSL technology.
- **Figure 2**: depicts a simplified scheme of a standard DSLAM card.
- **Figure 3**: shows a DSLAM system logic architecture according to the invention
- **Figure 4**: illustrates an example of DSLAM system chip implementation according to the invention.

### Detailed Description of the Preferred Embodiment

The invention takes benefits of both G.dmt and G.lite and is related to a flexible method based on DSLAM utilization and DSLAM architecture that incorporate a programmable Digital Signal Processor (DSP) and a Network Processor (NP). This flexible method takes advantage of the statistical nature of the number of active connections into a DSLAM at any given instant. This is achieved by providing a means to support full G.dmt rates for any of the attached users as long as half, or less than half, the users are actively moving data through the DSLAM, but by only using half the digital signal processing hardware and half the power consumption for the line drivers. The invention allows one to double the number of ADSL ports available over a conventional scheme given about 20% more power budget, depending on the power consumed by the analog front-end A/D and D/A converter hardware and the cost of the Network Processor hardware. Since the invention is based on the ITU-T G.dmt and G.lite standards, it works with existing G.dmt and G.lite unit that are already installed at customer premises.

When the utilization is under 50% with only half the subscribers or less active on their respective connections, all those users experience the maximum G.dmt rates possible on their wire. However, when utilization exceeds 50%, gradually active subscribers start to experience G.lite rates based on either a fixed policy or one that is based on a tiered tariff structure, until ultimately, when the utilization reaches 100%, all subscribers are forced to a maximum rate allowed by G.lite. Only as utilization drops, will active subscribers be brought back to their G.dmt maximum transmission rates. Once the utilization drops below 50% again, then all active subscribers will be able to utilize G.dmt's maximum transmission rates.

For sake of illustration, the following description is based on a DSLAM chip comprising 48 ports, i.e. up to 24 G.dmt ports and up to 48 G.lite ports depending upon DSLAM utilization, using IBM Cu-11 technology and an IBM high-performance DSP technology.

In order to optimize the digital signal processing hardware, programmable DSP resources are used. Since G.lite typically takes a bit more than 50% of the DSP processing capability of G.dmt, the DSP processing capability of two G.lite ports is adequate to realize one G.dmt port. As a consequence the use of the same programmable DSP resource allows the realization of two G.lite ports or one G.dmt port.

To handle the full G.dmt access capability, the DSLAM system according to the invention must include a full-rate line driver and receiver for all ports on the DSLAM card, i.e. 48 ports in this description example. Likewise, the DSLAM system must include a full-rate analog front-end with A/D and D/A converters capable of realizing G.dmt for all ports , i.e. 48 ports in this example.

To manage detection of various packet streams and perform flexible control of DSP function mode (G.dmt or G.lite) based on the current utilization in the DSLAM and detection of active subscribers based on active packet flow, the DSLAM system must include a Network Processor (NP) capability. Furthermore, the NP must be capable of detecting active voice call setups so that those individual users can be forced back to G.lite before the call setup is completed, and then to detect voice call hang-ups so that the same user can increase speed back to G.dmt.

The DSLAM system according to the invention must also comprised a fast means to switch back to G.lite when voice calls are being setup using G.dmt so as not to delay the voice call. This can be accomplished using the G.lite fast retrain once a G.lite connection has been established in a prior session. "Escape from handshake to fast retrain" procedure is detailed in G.992.2 standard. The total time for this is 3 seconds, one second for G.hs (G.994.1 standard) escape to G.lite fast retrain, and 2 seconds for a fast retrain back to showtime. Assuming outbound or inbound calls are detected immediately, this 3 seconds can be overlapped with the voice call setup. For outbound phone calls, while the network setup for the voice call is taking place, the 3 seconds of retraining time can take place, and only then, will the completion of the outbound call take place, or in the case of inbound calls, the caller to the Voice over ADSL user will simply experience 3 more seconds of delay before the phone begins to ring.

If one accepted a voice call over a full rate G.dmt connection, the line might be forced back down to G.lite later due to an increase in users' activity connected to the DSLAM, resulting in a noticeable drop-out in the middle of the voice call. This solution makes the assumption that the user would prefer the lower data rate in order to avoid the potential interruption in the middle of the voice call. If service level agreements were defined such that a given user was always to receive G.dmt service, then voice calls could continue without backing off to G.lite first. Also, a customer might decide they don't mind a 3 second drop-out in the middle of a conversation such that they can keep G.dmt rates when utilization is low going into the DSLAM.

In this example of DSLAM card comprising 48 ports, all users have access to G.dmt data rates of up to 8Mbps downstream as long as only 24 or less are actively using their ADSL connections. Activity is monitored by a Network Processor running in the DSLAM environment that monitors packet requests to the network. A given user is defined to be inactive if there are no packet requests being sent or received for a predetermined time, e.g. 5 minutes.

When the 25th user becomes active, one of the current 24 active users will be forced back to G.lite operation and the 25th user will only be allowed to make a G.lite connection, with maximum speeds of 1.5Mbps. As subsequent users become active, they will be brought on line with a G.lite connection, and take back one of the current users from G.dmt to G.lite until all 48 lines have active users, but all operating with G.lite.

Once the utilization drops back below 100%, users can be bumped back up to G.dmt. Because G.dmt takes 8-10 seconds to establish a connection, the speed at which the system decides to increase a user back to G.dmt should be modest. In addition, if a user has at least one Voice over DSL connection active, that user will remain at G.lite speeds until they hang up all their Voice over DSL connections. Again, a 5 minute duration is an example duration over which the system would wait before it bumps a user back up to G.dmt speeds. Other duration could be defined.

The choice of which users are either bumped up to G.dmt (as utilization drops back from 100%) or dropped back from G.dmt (as utilization approaches 100%) is complex and may be based on tiered service rates or other factors. This choice mechanism of choice is beyond the scope of the invention.

Once a user makes a request for a Voice over DSL connection, or receives a Voice over DSL phone call , the transceiver must be backed off to G.lite if it already had not been operating in G.lite mode. The very first time this is done, there will be significant latency introduced. After the first time, this latency will be a maximum of 3 seconds because of the fast retrain capability of G.lite. To avoid noticeable drop-outs in the middle of the voice calls, all users are preferably starting out with G.lite until the fast retrain parameters are established, and then the system bumps those users up to G.dmt when the overall system utilization allows it.

It is to be noticed that the support for voice over DSL and actions taken is a service level definition issue. If the operator could guarantee full G.dmt, then he could offer this to some customers even while running voice over DSL. This might be provisioned by not attaching as many lines to a given DSLAM line card, e.g. 40 lines instead of 48 so that 4 users always could be assured of G.dmt rates. Various service level features are possible. Smaller number of users with different service level agreements can also be afforded by the invention.

It should also be noted that depending on the eventual specification in the ITU-T for Very high bit rate DSL (VDSL), it may be possible to extend this invention to a platform capable of supporting n ports of VDSL, k*n ports of G.dmt, and 2*k*n ports of G.lite. Again, the requirements would mean that VDSL also runs on a highly flexible DSP platform capable of reconfiguration and that the cost for the analog front-end or line driver technology for VDSL is not significantly higher than that of G.dmt. If the costs remain considerably higher for VDSL than for G.dmt then the costs of such a flexible DSLAM card may outweight the benefits of being able to pack more lines onto a card.

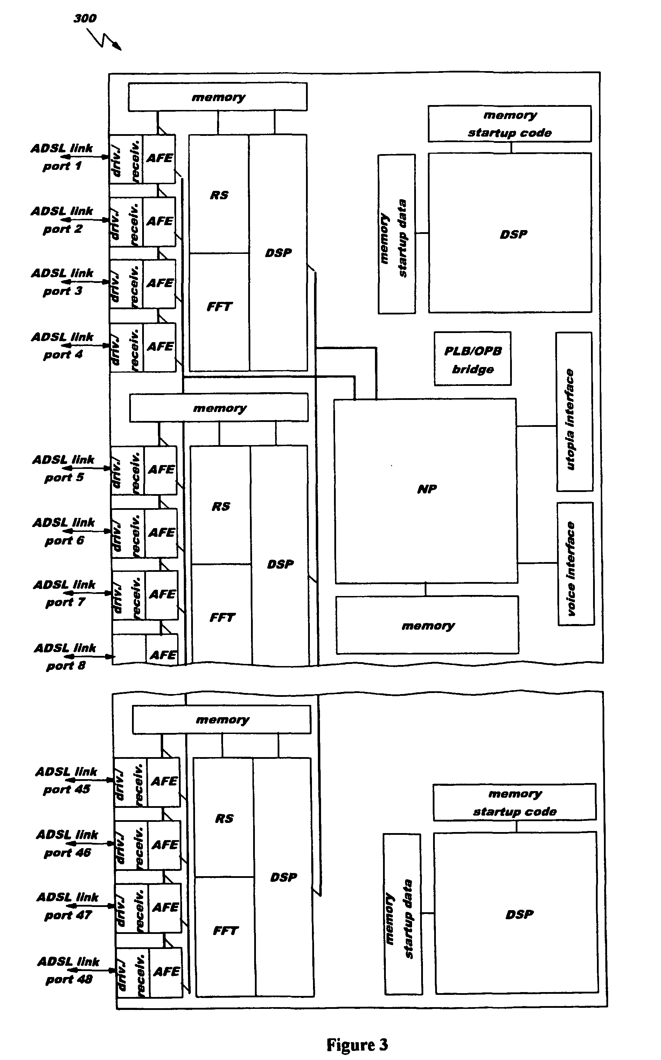

Figure 3 shows logic architecture 300 of a DSLAM card comprising 48 ports, according to the invention. Each of the 48 ports includes a full-rate (G.dmt) line driver and receiver (driv./receiv.) and a full-rate analog front-end (AFE) with A/D and D/A converters. AFEs are connected to a memory block that could be shared or not. A Network Processor (NP) core is linked to each ADSL port's I/O port, e.g. Utopia, so as to analyze data stream and determine the protocol to be used in each DSP, G.dmt or G.lite. As mentioned above, each DSP core coupled with a Reed Solomon core (RS) and Fast Fourrier Transform (FFT) through OPB bus handles several ports. In the implementation example, each DSP core is able to support four ports, i.e. two G.dmt ports, four G.lite ports or one G.dmt port and two G.lite ports. Thus, 12 DSP cores are implemented in the illustrated DSLAM system. DSPs receive instruction from NP according to the current number of active subscribers coming into DSLAM system 300 so as to be configured either in G.dmt or G.lite mode. DSP, RS and FFT cores receive data from NP. NP is also connected to Utopia and voice interfaces and a memory that could be external to save room in the system. In this example, DSLAM System 300 further comprise a PLB/OPB bridge and two DSPs, one per 24 ports (or 12 G.dmt ports), which executes the startup state machinery. These DSPs are linked to memories that contain startup code and data.

Depending upon used technology and data processing rate, the connection of ADSL link ports of DSLAM card to local loop include switching devices or Time Division Multiplexing (TDM) devices. Such devices are used to drive customer connections on adapted ADSL link ports. For example, if a new connection is requested when all resources are used and at least one connection is a G.dmt connection, e.g. all possible G.dmt connections are used, one customer connected with a G.dmt connection will be swapped to a G.lite connection according to the criteria mentioned above. In such case, it is requested that the new connection shares the same hardware resource as the connection swapped from G.dmt to G.lite and thus, to drive new requested G.lite connection accordingly. Using switching devices controlled by the network processor allow one to drive easily the connections on the right ports. On the other hand, the use of TDM devices reduces hardware requirements and may be optimized according to DSLAM card architecture since several TDM devices may be used, e.g. one per set of ADSL link ports sharing same hardware resources.

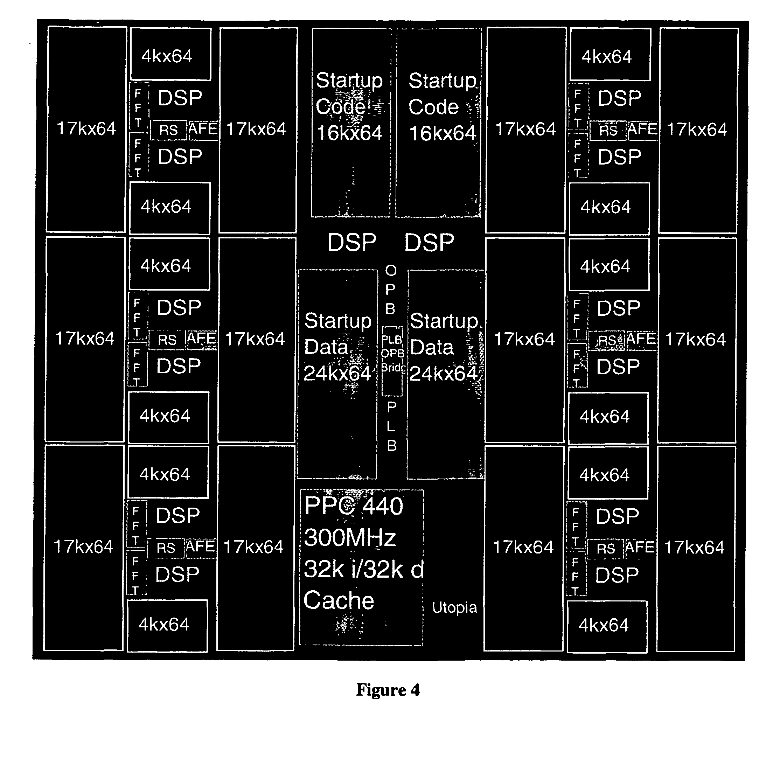

As mentioned above, the description is based on a chip built in IBM's Cu-11 technology, i.e. 0.13 micron. A particular implementation is built using IBM's high-performance DSP technology with the programmable DSP core running at 300MHz coupled with fast and flexible hardware blocks for performing the FFT (200MHz core) and Reed Solomon (100MHz core) functions, interconnected with a private OPB bus per programmable DSP core running at 100MHz. As such, a single core would be capable of supporting 2 G.dmt or 4 G.lite ports in 13mm2 of Cu-11. This would mean a 24 port chip would consume 156mm2. Included in this 13mm2 per dual ports is the overhead of having one controller DSP per 12 ports which executes the startup state machinery and is connected to a large block of memory containing the startup code. In total, the chip would have 12 programmable DSP cores for the underlying signal processing, and 2 for the startup state machinery. In addition, a PPC 440 running at 300MHz would be the Network Processor handling the packets on all 24 ports (or 48 when in G.lite mode of operation) or a net downstream of 192Mbps and 15.36Mbps upstream. This would enable a single chip per line card to be responsible for all the DSP and NP functions, and the NP would only need a single external SDRAM. This would mitigate the cost overhead of including the PPC 440 core and the required external SDRAM that it needs to perform the NP functions because there would be only one per DSLAM line card to support 24 G.dmt ports or 48 G.lite ports. The additional area for the PPC 440 in Cu-11 would be 14mm2 or less leading to an overall chip area of 170mm2 or 13mm plus the I/O ring of 1mm or a 14mm on a side chip. TDM devices, external or embedded on the DSLAM chip, may be used, e.g. each TDM device may handle four ADSL links. A diagram of this chip implementation is shown on Figure 4.

Naturally, in order to satisfy local and specific requirements, a person skilled in the art may apply to the solution described above many modifications and alterations all of which, however, are included within the scope of protection of the invention as defined by the following claims.

## Claims

1. A DSL access multiplexor system for optimizing DSL connections comprising :
- i DSL links ;
- flexible and programmable means adapted for handling i DSL links according to a first DSL protocol or j DSL links according to a second DSL protocol, i being greater than j, said first DSL protocol requiring less processing power than said second DSL protocol ; and,
- control means adapted for setting said flexible and programmable means into a first mode handling i DSL links according to said first DSL protocol or into a second mode handling j DSL links according to said second DSL protocol.

2. The system of claim 1 wherein said control means further comprise analyzing means to determine the number of active connections and the current mode.

3. The system of claim 2 wherein said control means further comprise first adjusting means adapted for handling a new connection request such that if the current mode corresponds to said first one and it exists at least one free link among said set of i DSL links, the new connection is set to one of said free links among said set of i DSL links, else if the current mode corresponds to said second one and it exists at least one free link among said set of j DSL links, the new connection is set to one of said free links among said set of j DSL links, else if the current mode corresponds to said second one and all the j DSL links are used, the current mode is changed from said second mode to said first mode, the j DSL connections are transferred among the set of i DSL connections and adapted to said first protocol, and the new connection is set to a free link among said set of i DSL links.

4. The system of either claim 2 or claim 3 wherein said control means are adapted for transfering automatically all active connections from said second DSL protocol to said first DSL protocol when a voice call setup is detected upon one of said active connections, according to predetermined conditions, if the current mode corresponds to said second one.

5. The system of anyone of claims 2 to 4 wherein said control means further comprise second adjusting means adapted for optimizing current connections when current mode corresponds to said first one and the number of active connections is less or equal to a predetermined threshold k such that the current mode is changed from said first mode to said second mode, the active DSL connections are transferred among the set of j DSL links and adapted to said second protocol.

6. The system of claim 5 wherein said threshold k is determined such that the processing power requested to handle k DSL connections based on said first protocol is equivalent as the one requested to handle j DSL connections based on said second protocol.

7. The system of either claim 5 or claim 6 wherein said second adjusting means further comprise voice call setup and hang-up detection means so that said connection optimization is inhibited as long as at least one voice call over a DSL connection has been setup and not hang-up.

8. The system of anyone of claims 1 to 7 wherein said flexible and programmable means comprise at least one flexible programmable digital signal processor.

9. A DSL access multiplexor system for optimizing DSL connections comprising several systems as described in anyone of claims 1 to 8.

10. The system of claim 9 wherein said control means comprise at least one network processor.

11. A DSL access multiplexor system for optimizing DSL connections as described in anyone of claims 1 to 10 that is implemented on a chip.

12. A method for optimizing DSL connections in a DSL access multiplexor being adapted to handle at least two DSL protocols wherein a first DSL protocol requires less processing power than the second DSL protocol, said DSL access multiplexor comprising up to i DSL links based on said first DSL protocol and up to j DSL links based on said second DSL protocol, i being greater than j, said DSL access multiplexor further comprising at least one flexible and programmable means, said at least one flexible and programmable means being adapted to handle one of said first and second DSL protocol at a time, said method comprising the steps of:
- looking for new DSL connection request ;
- if a new DSL connection is required and at least one link based on said second DSL protocol is available, setting said requested connection based on said second DSL protocol ;
- else if a new DSL connection is required and at least one link based on said first DSL protocol is available, setting said requested connection based on said first DSL protocol ;
- else if a new DSL connection is required and at least k connections based on said second DSL protocol are already established, k being the minimum integer value allowing to swap k connections according to said second DSL protocol to at least k+1 connections according to said first DSL protocol :
- determining said k connections based on said second DSL protocol according to first predetermined criteria ;
- swapping said k connections based on said second DSL protocol to k connections based on said first DSL protocol ; and,
- setting said requested connection based on said first DSL protocol.

13. The method of claim 12 wherein new connections are established according to said first DSL protocol.

14. The method of either claim 12 or claim 13 further comprising the step of transfering automatically an active connection between said second DSL protocol to said first DSL protocol when a voice call setup is detected upon said active connection, according to predetermined conditions.

15. The method of anyone of claims 12 to 14 further comprising further comprising the steps of :
- looking for free links ;
- if it exists at least one free link based on said second DSL protocol and at least one active connection based on said first DSL protocol :
- determining at least one active connection based on said first DSL protocol according to second predetermined criteria ;
- swapping said at least one determined active connection based on said first DSL protocol to a connection based on said second DSL protocol.

16. The method of anyone of claims 12 or claim 15 further comprising the step of freeing DSL connections not used during a predetermined time.

17. The method of anyone of claims 12 to 16 wherein said first or second predetermined criteria are based on the type of DSL connection or the subscription type of DSL connection.

18. The method of anyone of claims 12 to 17 wherein said first DSL protocol is G.lite protocol and said second DSL protocol is G.dmt protocol according to G.992.2 and G.992.1 standards.

## Patentansprüche

1. DSL-Zugriffsmultiplexersystem zur Optimierung von DSL-Verbindungen, das Folgendes umfasst:
- i DSL-Verbindungen;
- ein flexibles und programmierbares Mittel, das zur Bearbeitung von i DSL-Verbindungen gemäß einem ersten DSL-Protokoll oder j DSL-Verbindungen gemäß einem zweiten DSL-Protokoll geeignet ist, wobei i größer als j ist, wobei das erste DSL-Protokoll weniger Verarbeitungsleistung als das zweite DSL-Protokoll benötigt; und
- ein Steuermittel, das zum Setzen des flexiblen und programmierbaren Mittels in einen ersten Modus, in dem i DSL-Verbindungen gemäß dem ersten DSL-Protokoll bearbeitet werden, oder in einen zweiten Modus geeignet ist, in dem j DSL-Verbindungen gemäß dem zweiten DSL-Protokoll bearbeitet werden.

2. System nach Anspruch 1, wobei das Steuermittel außerdem ein Analysemittel zum Ermitteln der Anzahl aktiver Verbindungen und des aktuellen Modus umfasst.

3. System nach Anspruch 2, wobei das Steuermittel außerdem ein erstes Anpassungsmittel umfasst, das zur Bearbeitung einer neuen Verbindungsanforderung geeignet ist, so dass, falls der aktuelle Modus dem ersten entspricht und es mindestens eine freie Verbindung in dem Satz von i DSL-Verbindungen gibt, die neue Verbindung auf eine der freien Verbindungen aus dem Satz von i DSL-Verbindungen gesetzt wird, und falls der aktuelle Modus dem zweiten entspricht und es mindestens eine freie Verbindung aus dem Satz von j DSL-Verbindungen gibt, die neue Verbindung auf eine der freien Verbindungen aus dem Satz von j DSL-Verbindungen gesetzt wird, und falls der aktuelle Modus dem zweiten entspricht und alle j DSL-Verbindungen in Benutzung sind, der aktuelle Modus vom zweiten Modus zum ersten Modus geändert wird, die j DSL-Verbindungen auf den Satz von i DSL-Verbindungen übertragen und an das erste Protokoll angepasst werden und die neue Verbindung auf eine freie Verbindung aus dem Satz von i DSL-Verbindungen gesetzt wird.

4. System nach Anspruch 2 oder Anspruch 3, wobei das Steuermittel für die automatische Übertragung aller aktiven Verbindungen gemäß festgelegten Bedingungen vom zweiten DSL-Protokoll auf das erste DSL-Protokoll geeignet ist, wenn auf einer der aktiven Verbindungen ein Sprachverbindungsaufbau erkannt wird, falls der aktuelle Modus dem zweiten entspricht.

5. System nach irgendeinem der Ansprüche 2 bis 4, wobei das Steuermittel außerdem ein zweites Anpassungsmittel umfasst, das für die Optimierung der aktuellen Verbindungen geeignet ist, wenn der aktuelle Modus dem ersten entspricht und die Anzahl aktiver Verbindungen kleiner oder gleich einem festgelegten Schwellenwert k ist, so dass der aktuelle Modus vom ersten Modus zum zweiten Modus geändert wird, die aktiven DSL-Verbindungen auf den Satz von j DSL-Verbindungen übertragen und an das zweite Protokoll angepasst werden.

6. System nach Anspruch 5, wobei der Schwellenwert k so festgelegt wird, dass die zur Bearbeitung von k DSL-Verbindungen auf der Grundlage des ersten Protokolls benötigte Verarbeitungsleistung gleichwertig wie diejenige ist, die zur Bearbeitung von j DSL-Verbindungen auf der Grundlage des zweiten Protokolls erforderlich ist.

7. System nach Anspruch 5 oder Anspruch 6, wobei das zweite Anpassungsmittel außerdem ein Sprachverbindungsaufbau- und ein Trennerkennungsmittel umfasst, so dass die Verbindungsoptimierung unterdrückt wird, solange mindestens eine Sprachverbindung über eine DSL-Verbindung aufgebaut und nicht getrennt wurde.

8. System nach irgendeinem der Ansprüche 1 bis 7, wobei das flexible und programmierbare Mittel mindestens einen flexiblen programmierbaren digitalen Signalprozessor umfasst.

9. DSL-Zugriffsmultiplexer zur Optimierung von DSL-Verbindungen, die mehrere Systeme umfassen, wie in irgendeinem der Ansprüche 1 bis 8 beschrieben wurde.

10. System nach Anspruch 9, wobei das Steuermittel mindestens einen Netzwerkprozessor umfasst.

11. DSL-Zugriffsmultiplexersystem zur Optimierung von DSL-Verbindungen, wie in irgendeinem der Ansprüche 1 bis 10 beschrieben wurde, das auf einem Chip ausgeführt wird.

12. Verfahren zum Optimieren von DSL-Verbindungen in einem DSL-Zugriffsmultiplexer, der für die Bearbeitung von mindestens zwei DSL-Protokollen geeignet ist, wobei ein erstes DSL-Protokoll weniger Verarbeitungsleistung als das zweite DSL-Protokoll benötigt, wobei der DSL-Zugriffsmultiplexer bis zu i DSL-Verbindungen auf der Grundlage des ersten DSL-Protokolls und bis zu j DSL-Verbindungen auf der Grundlage des zweiten DSL-Protokolls umfasst, wobei i größer als j ist, wobei das DSL-Zugriffsmultiplexer außerdem mindestens ein flexibles und programmierbares Mittel umfasst, wobei das mindestens eine flexible und programmierbare Mittel für die Bearbeitung von einem aus dem ersten und zweiten DSL-Protokoll zu einem bestimmten Zeitpunkt geeignet ist, wobei das Verfahren die folgenden Schritte umfasst:
- Suchen nach einer neuen DSL-Verbindungsanforderung;
- falls eine neue DSL-Verbindung gewünscht wird und mindestens eine Verbindung auf der Grundlage des zweiten DSL-Protokolls verfügbar ist, Einrichten der angeforderten Verbindung auf der Grundlage des zweiten DSL-Protokolls;
- andernfalls, falls eine neue DSL-Verbindung gewünscht wird und mindestens eine Verbindung auf der Grundlage des ersten DSL-Protokolls verfügbar ist, Einrichten der angeforderten Verbindung auf der Grundlage des ersten DSL-Protokolls;
- andernfalls, falls eine neue DSL-Verbindung gewünscht wird und mindestens k Verbindungen auf der Grundlage des zweiten DSL-Protokolls bereits eingerichtet worden sind, wobei k der ganzzahlige Mindestwert ist, der ein Umschalten von k Verbindungen gemäß dem zweiten DSL-Protokoll auf mindestens k+1 Verbindungen gemäß dem ersten DSL-Protokoll ermöglicht:
- Festlegen der k Verbindungen auf der Grundlage des zweiten DSL-Protokolls gemäß ersten festgelegten Kriterien;
- Umschalten der k Verbindungen auf der Grundlage des zweiten DSL-Protokolls auf k Verbindungen auf der Grundlage des ersten DSL-Protokolls; und
- Einrichten der angeforderten Verbindung auf der Grundlage des ersten DSL-Protokolls.

13. Verfahren nach Anspruch 12, wobei neue Verbindungen gemäß dem ersten DSL-Protokoll eingerichtet werden.

14. Verfahren nach Anspruch 12 oder Anspruch 13, das außerdem den Schritt des automatischen Übertragens einer aktiven Verbindung vom zweiten DSL-Protokoll zum ersten DSL-Protokoll gemäß festgelegten Bedingungen umfasst, wenn auf der aktiven Verbindung ein Sprachverbindungsaufbau erkannt wird.

15. Verfahren nach irgendeinem der Ansprüche 12 bis 14, das außerdem die folgenden Schritte umfasst:
- Suchen nach freien Verbindungen;
- falls mindestens eine freie Verbindung auf der Grundlage des zweiten DSL-Protokolls und mindestens eine aktive Verbindung auf der Grundlage des ersten DSL-Protokolls vorhanden sind:
- Ermitteln von mindestens einer aktiven Verbindung auf der Grundlage des ersten DSL-Protokolls gemäß zweiten festgelegten Kriterien;
- Umschalten der mindestens einen ermittelten aktiven Verbindung auf der Grundlage des ersten DSL-Protokolls auf eine Verbindung auf der Grundlage des zweiten DSL-Protokolls.

16. Verfahren nach Anspruch 12 oder Anspruch 15, das außerdem den Schritt des Freigebens von DSL-Verbindungen umfasst, die während einer festgelegten Zeitspanne nicht verwendet werden.

17. Verfahren nach irgendeinem der Ansprüche 12 bis 16, wobei die ersten oder zweiten festgelegten Kriterien auf dem Typ von DSL-Verbindung oder dem Teilnehmeranschlusstyp der DSL-Verbindung beruhen.

18. Verfahren nach irgendeinem der Ansprüche 12 bis 17, wobei das erste DSL-Protokoll das G.Lite-Protokoll und das zweite DSL-Protokoll das G.DMT-Protokoll gemäß den Standards G.992.2 und G.992.1 ist.

## Revendications

1. Un système multiplexeur d'accès DSL pour optimiser des connexions DSL, comprenant :
- i liaisons DSL;
- des moyens flexibles et programmables, adaptés pour traiter i liaisons DSL, selon un premier protocole DSL, ou j liaisons DSL, selon un deuxième protocole DSL, i étant supérieur à j, ledit premier protocole DSL demandant moins de puissance de traitement que ledit deuxième protocole DSL; et
- des moyens de commande, adaptés pour établir lesdits moyens flexibles et programmables en un premier mode, traitant i liaisons DSL, selon ledit premier protocole DSL, ou en un deuxième mode traitant j liaisons DSL, selon ledit deuxième protocole DSL.

2. Le système selon la revendication 1, dans lequel lesdits moyens de commande comprennent en outre des moyens d'analyse pour déterminer le nombre de connexions actives et le mode actuel.

3. Le système selon la revendication 2, dans lequel lesdits moyens de commande comprennent en outre des premiers moyens d'ajustement, adaptés pour traiter une nouvelle requête de connexion, de manière que, si le mode actuel correspond audit premier et qu'il existe au moins une liaison libre parmi ledit jeu des i liaisons DSL, la nouvelle connexion est établie vers l'une desdites liaisons libres parmi ledit jeu des i liaisons DSL, sinon, si le mode actuel correspond audit deuxième et s'il existe au moins une liaison libre parmi ledit jeu des j liaisons DSL, la nouvelle connexion est fixée à l'une desdites liaisons libres parmi ledit jeu des j liaisons DSL, sinon, si le mode actuel correspond audit deuxième et que la totalité des j liaisons DSL sont utilisées, le mode actuel est modifié, dudit deuxième mode audit premier mode, les j connexions DSL sont transférées parmi le jeu des i connexions DSL et adaptées audit premier protocole, et la nouvelle connexion est fixée à une liaison libre parmi ledit jeu des i liaisons DSL.

4. Le système selon la revendication 2 ou la revendication 3, dans lequel lesdits moyens de commande sont adaptés pour transférer automatiquement la totalité des connexions actives venant dudit deuxième protocole DSL audit premier protocole DSL, lorsqu'un établissement d'appel vocal est détecté sur l'une desdites connexions actives, selon des conditions prédéterminées, si le mode actuel correspond audit deuxième.

5. Le système selon l'une quelconque des revendications 2 à 4, dans lequel lesdits moyens de commande comprennent en outre des deuxième moyens d'ajustement, adaptés pour optimiser les connexions actuelles lorsque le mode actuel correspond audit premier et que le nombre desdites connexions actives est inférieur ou égal à un seuil k prédéterminé, de manière que le mode actuel soit modifié, dudit premier mode audit deuxième mode, les connexions DSL actives sont transférées parmi le jeu des j liaisons DSL et adaptées audit deuxième protocole.

6. Le système selon la revendication 5, dans lequel ledit seuil k est déterminé, de manière que la puissance de traitement, requise pour traiter k connexions DSL d'après ledit premier protocole, soit équivalente à celle requise pour traiter j connexions DSL d'après ledit deuxième protocole.

7. Le système selon la revendication 5 ou la revendication 6, dans lequel lesdits deuxièmes moyens d'ajustement comprennent en outre l'établissement d'un appel vocal et des moyens de détection de raccrochage, de manière que ladite optimisation de connexion soit empêchée tant qu'au moins un appel vocal, effectué sur une connexion DSL, a été établi et qu'il n'y a pas eu raccrochage.

8. Le système selon l'une quelconque des revendications 1 à 7, dans lequel lesdits moyens flexibles et programmables comprennent au moins un processeur de signal numérique flexible et programmable.

9. Un système multiplexeur d'accès DSL, pour optimiser des connexions DSL comprenant une pluralité de systèmes, tel que décrit à l'une quelconque des revendications 1 à 8.

10. Le système selon la revendication 9, dans lequel lesdits moyens de commande comprennent au moins un processeur de réseau.

11. Un système multiplexeur à accès DSL pour optimiser des connexions DSL, tel que décrit selon l'une quelconque des revendications 1 à 10, mis en oeuvre sur une puce électronique.

12. Un procédé pour optimiser des connexions DSL dans un multiplexeur à accès DSL, adapté pour traiter au moins deux protocoles DSL, dans lequel un premier protocole DSL demande moins de puissance de traitement que le deuxième protocole DSL, ledit multiplexeur d'accès DSL comprenant jusqu'à i liaisons DSL, basées sur ledit premier protocole DSL, et jusqu'à j liaisons DSL, basées sur ledit deuxième protocole DSL, i étant supérieur à j, ledit multiplexeur d'accès DSL comprenant en outre au moins un moyen flexible et programmable, ledit au moins un moyen flexible et programmable étant adapté pour traiter à la fois l'un desdits premier et deuxième protocoles DSL, ledit procédé comprenant les étapes consistant à:
- rechercher une requête de nouvelle connexion DSL;
- si une nouvelle connexion DSL est requise et qu'au moins une liaison, basée sur ledit deuxième protocole DSL, est disponible, établier ladite connexion requise basée sur ledit deuxième protocole DSL;
- sinon, si une nouvelle connexion DSL est requise et qu'au moins une liaison, d'après ledit premier protocole DSL, est disponible, établir ladite connexion requise basée sur ledit premier protocole DSL;
- sinon, si une nouvelle connexion DSL est requise et qu'au moins k connexions, basées sur ledit deuxième protocole DSL, sont déjà établies, k étant la valeur entière minimale permettant de permuter k connexions selon ledit deuxième protocole DSL, en au moins k+1 connexions, selon ledit premier protocole DSL;
- déterminer lesdites k connexions, basées sur ledit deuxième protocole DSL, selon des premiers critères prédéterminés;
- permuter lesdites k connexions, basées sur ledit deuxième protocole DSL, en k connexions, basées sur ledit premier protocole DSL; et
- établir ladite connexion requise, basées sur ledit premier protocole DSL.

13. Le procédé selon la revendication 12, dans lequel de nouvelles connexions sont établies selon ledit premier protocole DSL,

14. Le procédé selon la revendication 12 ou la revendication 13, comprenant en outre l'étape de transfert automatique d'une connexion active, entre ledit deuxième protocole DSL et ledit premier protocole DSL, lorsque l'établissement d'un appel vocal est détecté lors de ladite connexion active, selon des conditions prédéterminées.

15. Le procédé selon l'une quelconque des revendications 12 à 14, comprenant en outre les étapes consistant à :
- rechercher les liaisons libres ;
- s'il existe au moins une liaison libre, basée sur ledit deuxième protocole DSL, et au moins une connexion active, basée sur ledit premier protocole DSL ;
- déterminer au moins une connexion active, basée sur ledit premier protocole DSL, selon des deuxièmes critères prédéterminés ;
- permuter ladite au moins une connexion active, déterminée d'après ledit premier protocole DSL, pour une connexion basée sur ledit deuxième protocole DSL.

16. Le procédé selon l'une quelconque des revendications 12 ou revendication 15, comprenant en outre l'étape de libération des connexions DSL, non-utilisées, durant une période de temps prédéterminée.

17. Le procédé selon l'une quelconque des revendications 12 à 16, dans lequel lesdits premiers ou deuxièmes critères prédéterminés sont basés sur le type de connexion DSL ou sur le type d'abonnement à une connexion DSL.

18. Le procédé selon l'une quelconque des revendications 12 à 17, dans lequel ledit premier protocole DSL est un protocole G.lite et ledit deuxième protocole DSL est un protocole G.dmt, selon les standards G.992.2 et G.992.1.
